# EUROPEAN PATENT SPECIFICATION

(11) **EP 4 505 099 B1**
(45) Date of publication and mention of the grant of the patent: **27.05.2026**
(21) Application number: 23716767.1
(22) Date of filing: 31.03.2023
(51) Int. Cl.: F16J 15/44, F16J 15/16

(54) **SEALING SYSTEM WITH EXTRA PRESSURE PROTECTION, MACHINE AND METHOD**
DICHTUNGSSYSTEM MIT ÜBERDRUCKSCHUTZ, MASCHINE UND VERFAHREN
SYSTÈME D'ÉTANCHÉITÉ À PROTECTION SUPPLÉMENTAIRE CONTRE LA PRESSION, MACHINE ET PROCÉDÉ

(30) Priority: 01.04.2022 IT 202200006518
(43) Date of publication of application: 12.02.2025
(73) Proprietor: NUOVO PIGNONE TECNOLOGIE - S.R.L., 50127 Florence (IT)
(72) Inventor: MASI, Guido, 50127 Firenze (IT); BERNOCCHI, Andrea, 50127 Firenze (IT); RIZZO, Emanuele, 50127 Firenze (IT); MARTINI, Luca, 50127 Firenze (IT)
(74) Representative: Novagraaf Group
(86) International application number: PCT/EP2023/025147
(87) International publication number: WO 2023/186354

(56) References cited:
- WO-A1-01/57420
- US-A1- 2003 062 686

## Description

### TECHNICAL FIELD

The subject-matter disclosed herein relates to a sealing system with extra pressure protection, a machine comprising such sealing system, and a protection method that operates in case of failure of a seal arrangement of a shaft of a machine.

### BACKGROUND ART

It is known in the petroleum, chemical and gas industry to equip turbomachines with dry gas seals, which are dry-running mechanical seals, to prevent leakages of process fluid (which is particularly dirty and polluting in these applications) and avoid the use of lubricant oil. Since dry gas seals are used in harsh ambiences - such as oil exploration, extraction and refining, petrochemical industries, gas transmission and chemical processing - and works with dirty fluids, the possibility of a seal failure is very dangerous for the environment as it could cause an uncontrolled amount of process fluid to flow outside the turbomachine. US 2003/062686 A1 discloses a shaft seal structure based on a leaf seal, according to the preamble of claim 1. WO 01/57420 A1 discloses a positively biased packing ring brush seal.

Therefore, in June 2018, the American Petroleum Institute issued the first edition of the API692 "Dry Gas Sealing Systems for Axial, Centrifugal, Rotary Screw Compressors and Expanders" to set the minimum requirements of a dry gas sealing system for limiting the amount of uncontrolled gas to atmosphere. In order to avoid environment contamination, the correct operation of the dry gas sealing system requires precise control of the pressures and flow rates of processed gas and/or sealing gas that is fed to them in order to guarantee the required level of reliability of the system.

However, in case of a dry gas seal failure, or more in general a seal arrangement, the process fluid may flow uncontrolled outside the turbomachine.

### SUMMARY

It would be desirable to have a system which significantly reduce (or even avoid) process gas flow outside the turbomachine in case of seal failure, in particular dry gas seal failure; in particular, it would be desirable that such system has a limited impact on machine design.

The present invention is defined in the accompanying claims. According to an aspect, the subject-matter disclosed herein relates to a sealing system for a rotary shaft of a machine, the system being configured to separate a first zone surrounding a first portion of the rotary shaft and a second zone surrounding a second portion of the rotary shaft, the first zone being at a pressure higher than the second zone during operation of the machine. The sealing system comprises a sealing member, configured to face a lateral surface of the rotary shaft at an intermediate portion of the rotary shaft located between the first portion and the second portion, and a support member supporting the sealing member, configured to perform a movement due to a pressure difference between the first zone and the second zone. A gap is defined between the sealing system and the rotary shaft and the support member is further configured to close the gap when the pressure difference is higher than a predetermined value.

### BRIEF DESCRIPTION OF THE DRAWINGS

A more complete appreciation of the disclosed embodiments of the invention and many of the attendant advantages thereof will be readily obtained as the same becomes better understood by reference to the following detailed description when considered in connection with the accompanying drawings, wherein:
Fig. 1 shows a much simplified cross-sectional view of an embodiment (not part of the invention) of a machine provided with an innovative sealing system with extra pressure protection,
Fig. 2 shows a simplified cross-sectional view of a first embodiment (not part of the invention) of an innovative sealing system whose movement is a translation in axial direction, and
Fig. 3 shows a simplified cross-sectional view of a second embodiment of an innovative sealing system whose movement may be considered a rotation.

### DETAILED DESCRIPTION OF EMBODIMENTS

According to an aspect, the subject-matter disclosed herein relates to an innovative sealing system which can be equipped on a machine (e.g. a compressor or an expander) in order to reduce (or even avoid) gas flow outside the machine at the rotary shaft of the machine. The innovative sealing system may be operative in case of failure of standard seals, such as dry gas seals, which are already equipped on the turbomachine. The innovative sealing system is located at the machine shaft between the turbomachine and the standard seals.

In particular, the innovative sealing system seals the passage of gas (which is process gas) at the machine shaft when a failure of standard seals occurs during operation of the machine by modifying its position at the machine shaft (at least translating in an axial direction and possibly also rotating) in order to reduce (or even eliminate) the clearance between the sealing system and the machine shaft. It is to be noted that, when a failure of standard seals occurs during operation of the machine, the pressure upstream the standard seals increase very quickly and therefore the pressure difference across the innovative sealing system increases very quickly. Hence, the innovative sealing system becomes operative when the pressure difference across it is higher than the one during normal operation of the machine (normal operation is when no seal failure occurs).

Reference now will be made in detail to embodiments of the disclosure, examples of which are illustrated in the drawings. The examples and drawing figures are provided by way of explanation of the disclosure and should not be construed as a limitation of the disclosure. In fact, it will be apparent to those skilled in the art that various modifications and variations can be made in the present disclosure without departing from the scope of the appended claims. In the following description, similar reference numerals are used for the illustration of figures of the embodiments to indicate elements performing the same or similar functions. Moreover, for clarity of illustration, some references may be not repeated in all the figures.

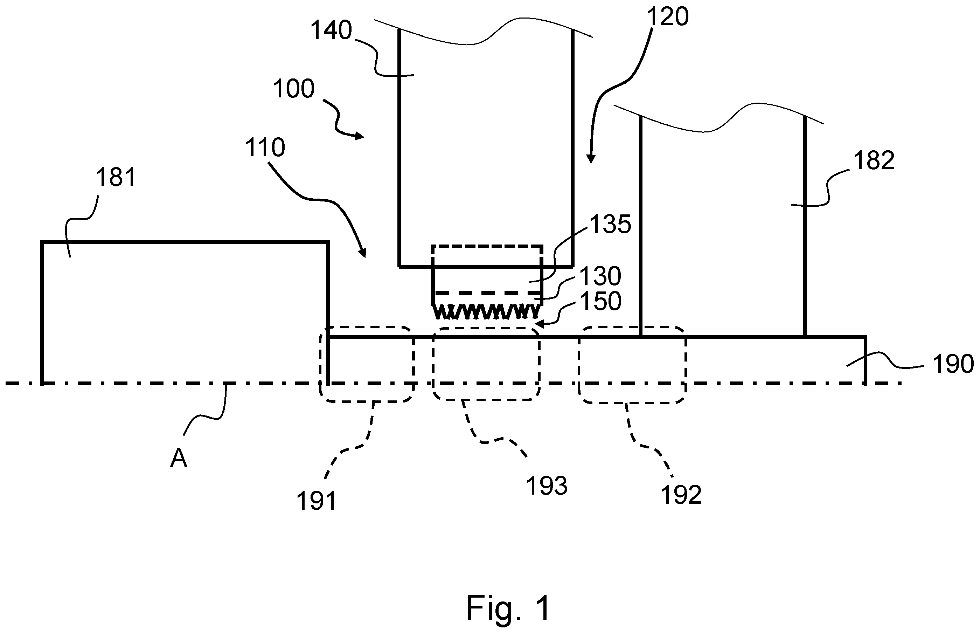

In Figure 1 there is shown a (partial) simplified cross-sectional view of an embodiment (not part of the invention) machine provided with an innovative sealing system with extra pressure protection. The sealing system is generally indicated with reference numeral 100. The sealing system 100 comprises a sealing member 130, preferably a labyrinth seal, for example having a plurality of teeth, and a support member 135 supporting the sealing member 130. In other words, the sealing member 130 is mechanically coupled to the support member 135. Preferably, the sealing member 130 is made of or comprises steel or abradable material or phenolic resin. It is to be noted that the support member 135 may be made of the same material of the sealing member 130 or may be made of different material. According to some embodiments, the sealing member and the support member may be realized in a single (suitably shaped) piece.

According to preferred embodiments (not part of the invention), the support member 135 is mechanically coupled to a body, which in particular may be a portion of a machine casing 140. In particular, the body surrounds a rotary shaft 190 of a machine. The sealing system 100 defines two zones of the machine: a first zone 110 which is at a first side of the sealing system 100 and a second zone 120 which is at a second side of the sealing system 100. It is to be noted that Fig. 1 shows (very schematically) a partial cross-sectional view of only half of the machine with respect to a plane defined by the A axis of the machine itself.

With non-limiting reference to Fig. 1, the first zone 110 is fluidly coupled to a turbomachine, for example a compressor or an expander 181, and the second zone 120 is fluidly coupled to a seal arrangement, for example a dry gas seal arrangement 182, which is particularly configured to limit gas leakage from the turbomachine (in particular around its rotary shaft 190) during normal operation of the machine. The sealing system 100 is instead configured to separate the first zone 110 which surrounds a first portion 191 of the rotary shaft 190 and the second zone 120 which surrounds a second portion 192 of the rotary shaft 190, in particular to fluidly isolate them when a failure occurs in the seal arrangement 182, as it will better explained in the following.

As partially and schematically shown in Fig. 1, the sealing member 130 is configured to face a lateral surface, in particular a cylindrical lateral surface, of the rotary shaft 190 at an intermediate portion 193 of the rotary shaft 190 which is located between the first portion 191 and the second portion 192 of the rotary shaft. In other words, the sealing system 100 is located between the first zone 110 and the second zone 120, the first zone 110 being at a pressure higher than the second zone 120 during operation of the machine. A gap 150 is defined between the sealing system 100, in particular the sealing member 130, and the rotary shaft 190 of the machine; it is to be noted, as better explained in the following, that the gap to be closed when needed may be located differently from gap 150 in Fig. 1.

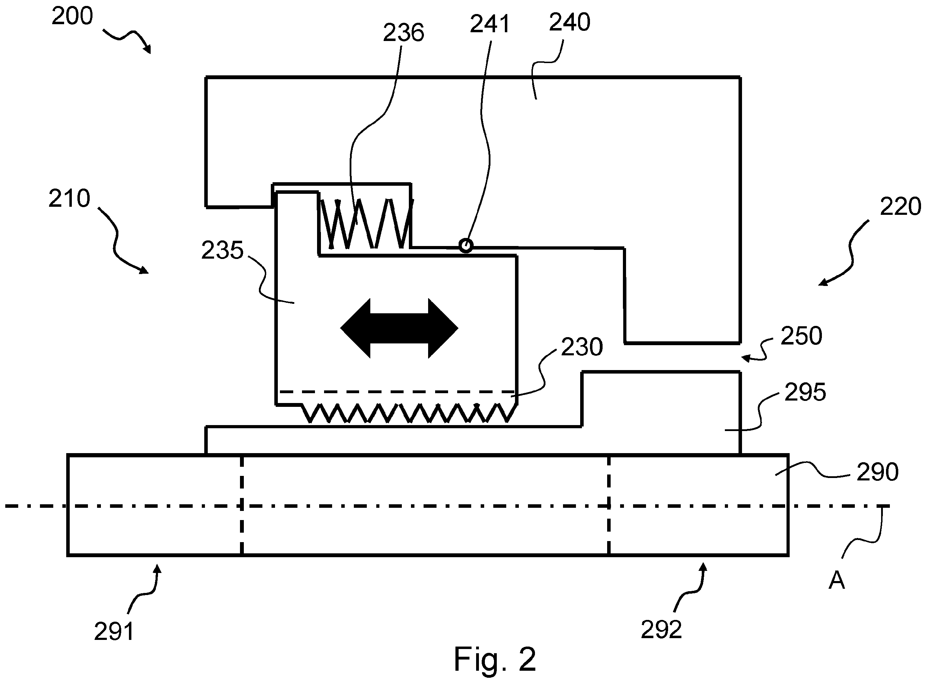

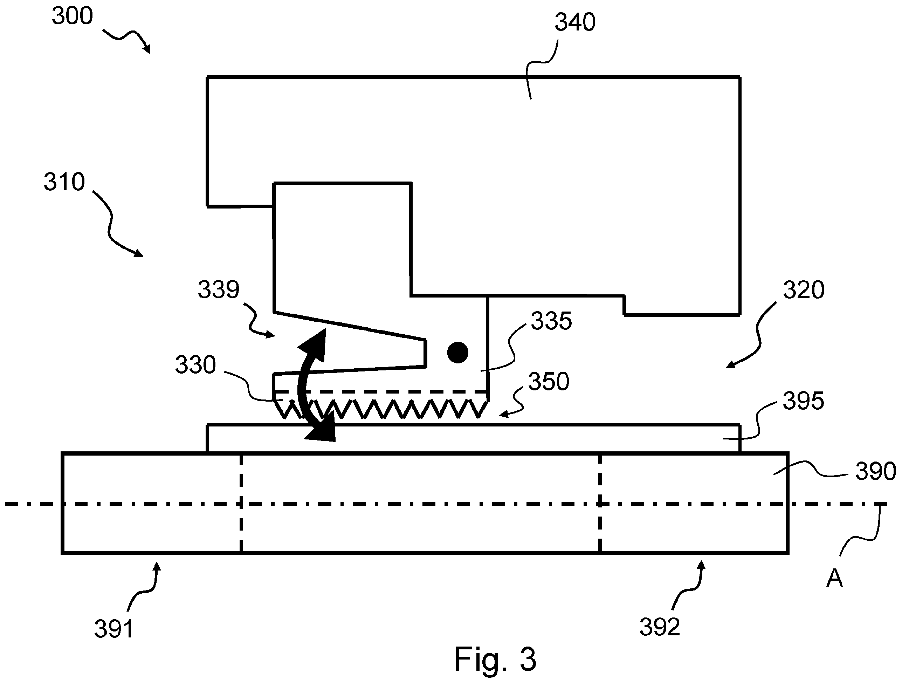

When a seal failure occurs, in particular when dry gas seal arrangement 182 failure occurs, a pressure difference between the first zone 110 and the second zone 120 may increase and exceed a predetermined value, for example a safety predetermined value, which for high pressure machines may be for example higher than 100 bar (however, the safety predetermined value depends on the rating of the machine); in fact, in case of failure of the seal arrangement the pressure drop across it will be null or very small, for example from 1 to 5 bar. As it will be apparent from the following, the support member 135 is configured to perform a movement at least in an axial direction due to the pressure difference between the first zone 110 and the second zone 120 and to close the gap 150 when the pressure difference is higher than the predetermined value - it is to be noted that Fig. 1 does not show how and why the support member 135 moves (as this figure is much simplified) while this may be understood from Fig. 2 and Fig. 3 considering the arrangement of the corresponding support members 235 and 335. In particular, the sealing system 100 is configured to reduce, in particular clear the gap 150 when the pressure difference is higher than the predetermined value.

For example, when a seal failure occurs, in particular when dry gas seal arrangement 182 failure occurs, the pressure difference between the first zone 110 and the second zone 120 may reach and even exceed the predetermined value, for example in less than 1 second, and as a result the machine is, typically automatically, turned off (the speed of the rotary shaft reaches zero for example in a time range variable from 5 to 15 minutes). As stated, when the pressure difference reaches the predetermined value, the support member 135 closes the gap 150. Advantageously, the sealing member 130 is configured to be able to close the gap 150 and keep it closed from the time when seal failure has been detected till the time when the machine is turned off and it is not rotating any longer, i.e. for a time period of for example from 5 to 15 minutes.

It is to be noted that a machine may be equipped with one or more innovative sealing systems. It is also to be noted that its sealing member may have a cylindrical inner surface which surrounds continuously and faces the external surface of the rotary shaft or may have one or more cuts which extends along an axial direction, interrupting the cylindrical development of the inner surface. Advantageously, such cuts do not extend along the entire axial length of the sealing member: for example, the cuts may extend along 80% of the axial length of the sealing member, leaving a portion of the internal surface of the sealing member with a continuous cylindrical development. Such cuts may allow different and/or independent movements of distinct portions of the sealing member.

Fig. 2 (not part of the invention) and Fig. 3 show two different embodiments of sealing system having different movement possibilities (see in particular the respective big black arrows).

According to the embodiment of Fig. 2 (not part of the invention), it is shown a sealing system 200 having a support member 235 which may perform a movement (in particular translation) only in axial direction, i.e. parallel to the direction of axis A of the rotary shaft 290. For example, the support member 235 may be coupled to a body 240 by an elastic element 236, in particular a spring. Advantageously, the support member 235 performs an axial movement (in particular translation) due to a force caused by the pressure difference between the first zone 210 and the second zone 220 equal to or greater than a predetermined value, thus closing a gap 250; the force due to the pressure difference is counter acted by an elastic element 236.

With non-limiting reference to Fig. 2, the sealing system 200 is configured to separate, in particular to fluidly separate, the first zone 210 which surrounds a first portion 291 of the rotary shaft 290 and the second zone 220 which surrounds a second portion 292 of the rotary shaft 290. It is to be noted that the rotary shaft 290 may be mechanically coupled to an additional element 295 which surrounds the rotary shaft 290 and rotates integral with the rotary shaft 290 - additional element 295 may be considered part of the rotary shaft. In particular, the gap 250 is defined in the second zone 220 between the body 240 and the rotary shaft 290, in particular between the body 240 and the additional element 295, more in particular a portion of the additional element 295 protruding radially with respect to the shaft 290.

Advantageously, when the support member 235 performs the axial movement, it translates with respect to the body 240 until it abuts against the additional element 295, in particular against the annular radially protruding portion of the additional element 295; in this way, the support member 235 closes the gap 250 and prevents the passage of fluid across the gap 250. Advantageously, the body 240 may comprise an additional mechanical gasket 241, for example an O-ring, in order to improve the sealing between the body 240 and the support member 235 while the support member 235 moves.

According to the embodiment of Fig. 3, it is shown a sealing system 300 having a support member 335 which performs a rotational movement around an axis (i.e. a movement having a component in an axial direction and a component in a radial direction), in particular due to a deformation of the support member 335, as it will better explained in the following.

With non-limiting reference to Fig. 3, the sealing system 300 comprises a sealing member 330 mechanically coupled to the support member 335 (for example welded or bonded or bolted). Advantageously, the support member 335 comprises an annual groove 339; the groove 339 is located on support member 335 on a side which faces the first zone 310, in particular being fluidly coupled with the first zone 310. The groove 339 is configured so that, when the pressure difference between the first zone 310 and the second zone 320 is equal to or greater than a predetermined value, at least part of the support member 335 perform a rotational movement. In particular, at least part of the support member 335 may rotate (in particular due to a deformation) with respect to an area or a point located at a portion of the support member 335 near the groove 339, in particular to an area or a point of the support member 335 located near the second zone 320 (see for example the black dot in Fig. 3). It is to be noted that according to embodiments similar to the one of Fig. 3 the support member may include at least two separate portions wherein a first portion may rotate with respect to the second portion; such rotation may be due to a deformation of the first portion and/or the second portion and/or another portion of the support member.

Advantageously, the support member 335 is mechanically coupled to a body 340. It is to be noted that the support member 335 is configured to rotate with respect to the body 340 due to a force acting on the groove 339, in particular caused by the pressure difference between the first zone 310 and the second zone 320 equal to or greater than a predetermined value, thus closing the gap 350. It is to be noted that due to the particular movement of the support member 335, closing of the gap 350 my derive from only partial contact of the sealing member 330 with the shaft 390 (or alternatively the additional element 395 as explained in the following paragraph), for example few teeth of the sealing member 330.

With non-limiting reference to Fig. 3, the support member 335 may be conceptually separated into three zones: a first zone which is mechanically coupled to the body 340, a second zone which is mechanically coupled to the sealing member 330 and a third zone which is between the first zone and the second zone and in which the groove 339 is located. As it can be easily apparent for the person skilled in the art, the third zone of the support member 335 is the one mainly affected by deformation and in which the point/area is located around which the rotation movement of the support member 335 is performed (see e.g. the black dot in Fig. 3). Advantageously, the sealing member 330 may have one or more cuts which extends along an axial direction, so that two or more sectors of the sealing member 330 can be defined. According to a first embodiment, the cuts do not extend along the entire axial length of the sealing member 330: for example, the cuts may extend along 80% of the axial length, leaving a portion of the internal surface of the sealing member 330 with a continuous cylindrical development; according to another embodiment, the cuts extend along the entire axial length of the sealing member 330. Such cuts may allow different and/or independent movements of distinct sectors of the sealing member 330. More advantageously, even the second zone of the support member 335 may have one or more cuts which extends along an axial direction, in particular at the sealing member cuts.

As stated, the sealing system 300 is configured to separate, in particular to fluidly separate, the first zone 310 which surrounds a first portion 391 of the rotary shaft 390 and the second zone 320 which surrounds a second portion 392 of the rotary shaft 390. It is to be noted that the rotary shaft 390 may be mechanically coupled to an additional element 395 which surrounds the rotary shaft 390 and rotates integral with the rotary shaft 390 - additional element 395 may be considered part of the rotary shaft. Advantageously, the gap 350 is defined between the sealing member 330 and the rotary shaft 390, in particular between the sealing member 330 and the additional element 395.

According to other embodiments (not shown in any figure), the support member may perform a translation both in an axial direction and a radial direction with respect to the axes A of the rotary shaft. For example, the body of the sealing system may have an inclined surface facing the rotary shaft on which the support member may slide, for example by means of an elastic element. In particular, the support member may translate both in axial and radial direction with respect to the body until the sealing member abuts against rotary shaft, closing a gap between the sealing member and the rotary shaft and preventing the passage of fluid across the gap.

According to another aspect (see e.g. Fig. 1), the subject-matter disclosed herein relates to a machine having a rotary shaft 190 and comprising:
- a compressor or expander 181 located at a first portion 191 of the rotary shaft 190,
- a seal arrangement 182, in particular a dry gas seal arrangement, located at a second portion 192 of the rotary shaft 190, and
- a sealing system 100 arranged between the compressor or expander 181 and the seal arrangement 182 and facing a third portion 193 of the rotary shaft 190, the sealing system 100 being configured to separate a first zone 110 surrounding the first portion 191 of the rotary shaft 190 and a second zone 120 surrounding the second portion 192 of the rotary shaft 190 performing a movement due to a pressure difference between the first zone 110 and the second zone 120 and closing a gap 150 between the sealing system 100 and the rotary shaft 190 when the pressure difference is higher than a predetermined value.

According to still another aspect, the subject-matter disclosed herein relates to a protection method in case of failure of a seal arrangement (such as e.g. seal 182 of Fig. 1) of a shaft (such as e.g. rotary shaft 190 of Fig. 1) of a machine (such as e.g. compressor or expander 181 of Fig. 1). A sealing system (such as e.g. system 100 of Fig. 1) is provided at the shaft upstream the seal arrangement. The sealing system is configured to seal, in particular to seal completely, the shaft when the pressure difference across the sealing system is higher than a predetermined value.

## Claims

1. A sealing system (300) for a rotary shaft (390) of a machine, wherein the system is configured to separate a first zone (310) surrounding a first portion (391) of the rotary shaft (390) and a second zone (320) surrounding a second portion (392) of the rotary shaft (390), the first zone (310) being at a pressure higher than the second zone (320) during operation of the machine, wherein the system comprises:
- a sealing member (330) configured to face a lateral surface of the rotary shaft (390) at an intermediate portion (393) of the rotary shaft (390), the intermediate portion (393) of the rotary shaft (390) being located between the first portion (391) of the rotary shaft (390) and the second portion (392) of the rotary shaft (390),
- a support member (335) supporting the sealing member (330); and
- a body (340), to which the support member (335) is mechanically coupled;
wherein a gap (350) is defined between the sealing system (300) and the rotary shaft (390);
**characterized in that** the support member (335) has a first portion which is mechanically coupled to the body (340), a second portion which is mechanically coupled to the sealing member (330) and a third portion which is between the first portion and the second portion and in which a groove (339) is located, the groove (339) being located on a side which faces the first zone (310), such that the support member (335) is configured to rotate with respect to the body (340) due to a force acting on the groove (339) caused by a pressure difference between the first zone (310) and the second zone (320), and to close the gap (350) when the pressure difference is higher than a predetermined value,
wherein said movement is at least in an axial direction.

2. The sealing system (300) of claim 1, wherein said movement is in an axial direction and a radial direction.

3. The sealing system (300) of claim 1, wherein said movement is part of a deformation of the support member (335) due to the pressure difference.

4. The sealing system (300) of claim 1, wherein said gap is defined between the sealing member (330) and the rotary shaft (390).

5. The sealing system (300) of claim 1, wherein said gap (350) is defined between the body (340) and the rotary shaft (390).

6. The sealing system (300) of claim 1, wherein said gap is defined between the support member (335) and the rotary shaft (390), in particular an annular radially protruding portion (395) integrated with or fixed to the rotary shaft (390).

7. The sealing system (300) of claim 1 wherein the sealing member (330) is made of or comprises steel or abradable material or phenolic resin.

8. The sealing system (300) of claim 1,
wherein the sealing member (330) is arranged to deform and/or to wear when the support member (335) moves and closes the gap (350).

9. A machine having a rotary shaft (390) and comprising:
- a sealing system (300) according to claim 1,
- a compressor or expander (181) mechanically coupled to the rotary shaft (390), and
- a seal arrangement (182), in particular a dry gas seal arrangement, wherein the sealing system (300) is arranged between the compressor and/or expander (181) and the seal arrangement (182).

10. A protection method in case of failure of a seal arrangement (182) of a rotary shaft (390) of a machine during operation of the machine,
wherein a sealing system (300) according to claim 1 is provided at the rotary shaft (390) upstream the seal arrangement (182),
wherein the sealing system (300) is configured to seal the rotary shaft (390) when the pressure difference across the sealing system (300) is higher than a predetermined value.

## Patentansprüche

1. Dichtungssystem (300) für eine Drehwelle (390) einer Maschine, wobei das System konfiguriert ist, um eine erste Zone (310), die einen ersten Abschnitt (391) der Drehwelle (390) umgibt, und eine zweite Zone (320) zu trennen, die einen zweiten Abschnitt (392) der Drehwelle (390) umgibt, wobei sich die erste Zone (310) während des Betriebs der Maschine auf einem höheren Druck als die zweite Zone (320) befindet, wobei das System umfasst:
- ein Dichtungselement (330), das konfiguriert ist, um einer Seitenoberfläche der Drehwelle (390) an einem Zwischenabschnitt (393) der Drehwelle (390) zugewandt zu sein, wobei sich der Zwischenabschnitt (393) der Drehwelle (390) zwischen dem ersten Abschnitt (391) der Drehwelle (390) und dem zweiten Abschnitt (392) der Drehwelle (390) befindet,
- ein Stützelement (335), das das Dichtungselement (330) stützt; und
- einen Körper (340), mit dem das Stützelement (335) mechanisch gekoppelt ist; wobei ein Spalt (350) zwischen dem Dichtungssystem (300) und der Drehwelle (390) definiert ist;
**dadurch gekennzeichnet, dass** das Stützelement (335) einen ersten Abschnitt, der mechanisch mit dem Körper (340) gekoppelt ist, einen zweiten Abschnitt, der mechanisch mit dem Dichtungselement (330) gekoppelt ist, und einen dritten Abschnitt aufweist, der zwischen dem ersten Abschnitt und dem zweiten Abschnitt liegt und in dem sich eine Nut (339) befindet, wobei sich die Nut (339) auf einer Seite befindet, die der ersten Zone (310) zugewandt ist, so dass das Stützelement (335) konfiguriert ist, um sich in Bezug auf den Körper (340) aufgrund einer auf die Nut (339) wirkenden Kraft zu drehen, die durch eine Druckdifferenz zwischen der ersten Zone (310) und der zweiten Zone (320) verursacht wird, und den Spalt (350) zu schließen, wenn die Druckdifferenz höher als ein vorbestimmter Wert ist,
wobei die Bewegung mindestens in einer axialen Richtung erfolgt.

2. Dichtungssystem (300) nach Anspruch 1, wobei die Bewegung in einer axialen Richtung und in einer radialen Richtung erfolgt.

3. Dichtungssystem (300) nach Anspruch 1, wobei die Bewegung Teil einer Verformung des Stützelements (335) aufgrund der Druckdifferenz ist.

4. Dichtungssystem (300) nach Anspruch 1, wobei der Spalt zwischen dem Dichtungselement (330) und der Drehwelle (390) definiert ist.

5. Dichtungssystem (300) nach Anspruch 1, wobei der Spalt (350) zwischen dem Körper (340) und der Drehwelle (390) definiert ist.

6. Dichtungssystem (300) nach Anspruch 1, wobei der Spalt zwischen dem Stützelement (335) und der Drehwelle (390) definiert ist, insbesondere einem ringförmigen, radial vorstehenden Abschnitt (395), der in die Drehwelle (390) integriert oder an dieser befestigt ist.

7. Dichtungssystem (300) nach Anspruch 1, wobei das Dichtungselement (330) aus Stahl oder Anstreifmaterial oder Phenolharz hergestellt ist oder diese umfasst.

8. Dichtungssystem (300) nach Anspruch 1,
wobei das Dichtungselement (330) so ausgelegt ist, dass es sich verformt und/oder abnutzt, wenn sich das Stützelement (335) bewegt und den Spalt (350) schließt.

9. Maschine mit einer Drehwelle (390) und umfassend:
- ein Dichtungssystem (300) nach Anspruch 1,
- einen Verdichter oder Entspanner (181), der mechanisch mit der Drehwelle (390) gekoppelt ist, und
- eine Dichtungsanordnung (182), insbesondere eine Trockengasdichtungsanordnung, wobei das Dichtungssystem (300) zwischen dem Verdichter und/oder Entspanner (181) und der Dichtungsanordnung (182) angeordnet ist.

10. Schutzverfahren im Falle eines Versagens einer Dichtungsanordnung (182) einer Drehwelle (390) einer Maschine während des Betriebs der Maschine,
wobei ein Dichtungssystem (300) nach Anspruch 1 an der Drehwelle (390) der Dichtungsanordnung (182) vorgelagert bereitgestellt ist,
wobei das Dichtungssystem (300) konfiguriert ist, um die Drehwelle (390) abzudichten, wenn die Druckdifferenz über das Dichtungssystem (300) hinweg höher als ein vorbestimmter Wert ist.

## Revendications

1. Système d'étanchéité (300) pour un arbre rotatif (390) d'une machine, dans lequel le système est conçu pour séparer une première zone (310) entourant une première partie (391) de l'arbre rotatif (390) et une seconde zone (320) entourant une deuxième partie (392) de l'arbre rotatif (390), la première zone (310) étant à une pression supérieure à la seconde zone (320) pendant le fonctionnement de la machine, dans lequel le système comprend :
- un élément d'étanchéité (330) conçu pour faire face à une surface latérale de l'arbre rotatif (390) au niveau d'une partie intermédiaire (393) de l'arbre rotatif (390), la partie intermédiaire (393) de l'arbre rotatif (390) se trouvant entre la première partie (391) de l'arbre rotatif (390) et la deuxième partie (392) de l'arbre rotatif (390),
- un élément de support (335) supportant l'élément d'étanchéité (330) ; et
- un corps (340), auquel l'élément de support (335) est accouplé mécaniquement ; dans lequel un espace (350) est défini entre le système d'étanchéité (300) et l'arbre rotatif (390) ;
**caractérisé en ce que** l'élément de support (335) présente une première partie qui est accouplée mécaniquement au corps (340), une deuxième partie qui est accouplée mécaniquement à l'élément d'étanchéité (330) et une troisième partie qui se trouve entre la première partie et la deuxième partie et dans laquelle se trouve une rainure (339), la rainure (339) se trouvant sur un côté qui fait face à la première zone (310), de telle sorte que l'élément de support (335) est conçu pour tourner par rapport au corps (340) en raison d'une force agissant sur la rainure (339) causée par une différence de pression entre la première zone (310) et la seconde zone (320), et pour fermer l'espace (350) lorsque la différence de pression est supérieure à une valeur prédéterminée,
dans lequel ledit déplacement s'effectue au moins dans une direction axiale.

2. Système d'étanchéité (300) selon la revendication 1, dans lequel ledit déplacement s'effectue dans une direction axiale et une direction radiale.

3. Système d'étanchéité (300) selon la revendication 1, dans lequel ledit déplacement fait partie d'une déformation de l'élément de support (335) en raison de la différence de pression.

4. Système d'étanchéité (300) selon la revendication 1, dans lequel ledit espace est défini entre l'élément d'étanchéité (330) et l'arbre rotatif (390).

5. Système d'étanchéité (300) selon la revendication 1, dans lequel ledit espace (350) est défini entre le corps (340) et l'arbre rotatif (390).

6. Système d'étanchéité (300) selon la revendication 1, dans lequel ledit espace est défini entre l'élément de support (335) et l'arbre rotatif (390), en particulier une partie en saillie annulaire radiale (395) intégrée ou fixée à l'arbre rotatif (390).

7. Système d'étanchéité (300) selon la revendication 1, dans lequel l'élément d'étanchéité (330) est constitué ou comprend de l'acier ou un matériau abradable ou une résine phénolique.

8. Système d'étanchéité (300) selon la revendication 1,
dans lequel l'élément d'étanchéité (330) est agencé pour se déformer et/ou pour s'user lorsque l'élément de support (335) se déplace et ferme l'espace (350).

9. Machine présentant un arbre rotatif (390) et comprenant :
- un système d'étanchéité (300) selon la revendication 1,
- un compresseur ou un dispositif d'expansion (181) accouplé mécaniquement à l'arbre rotatif (390), et
- un agencement d'étanchéité (182), en particulier un agencement d'étanchéité au gaz sec, dans lequel le système d'étanchéité (300) est agencé entre le compresseur et/ou le dispositif d'expansion (181) et l'agencement d'étanchéité (182).

10. Procédé de protection en cas de défaillance d'un agencement d'étanchéité (182) d'un arbre rotatif (390) d'une machine pendant le fonctionnement de la machine,
dans lequel un système d'étanchéité (300) selon la revendication 1 est prévu au niveau de l'arbre rotatif (390) en amont de l'agencement d'étanchéité (182),
dans lequel le système d'étanchéité (300) est conçu pour étanchéifier l'arbre rotatif (390) lorsque la différence de pression à travers le système d'étanchéité (300) est supérieure à une valeur prédéterminée.
